# EUROPÄISCHE PATENTSCHRIFT

(11) **EP 1 981 924 B1**
(45) Veröffentlichungstag und Bekanntmachung des Hinweises auf die Patenterteilung: **31.03.2010**
(21) Anmeldenummer: 07704128.3
(22) Anmeldetag: 24.01.2007
(51) Int. Cl.: C08G 18/10, C08G 18/28, C08G 18/71, C09J 175/04, C09K 3/10

(54) **FEUCHTIGKEITSHÄRTENDE ZUSAMMENSETZUNGEN ENTHALTEND SILANFUNKTIONELLE POLYMERE MIT GUTER HAFTUNG**
MOISTURE-CURING COMPOSITIONS CONTAINING SILANE-FUNCTIONAL POLYMERS WITH GOOD ADHESIVE PROPERTIES
COMPOSITIONS DURCISSABLES PAR L'HUMIDITÉ CONTENANT DES POLYMÈRES À FONCTION SILANE ET AYANT UN BON POUVOIR ADHÉSIF

(30) Priorität: 26.01.2006 EP 06100884
(43) Veröffentlichungstag der Anmeldung: 22.10.2008
(73) Patentinhaber: Sika Technology AG, 6340 Baar (CH)
(72) Erfinder: JUCKER, Barbara, CH-8057 Zürich (CH); BURCKHARDT, Urs, CH-8049 Zürich (CH); PFENNINGER, Ueli, CH-8804 Au (CH)
(74) Vertreter: Sika Patent Attorneys
(86) Internationale Anmeldenummer: PCT/EP2007/050698
(87) Internationale Veröffentlichungsnummer: WO 2007/085620

(56) Entgegenhaltungen:
- EP-A- 0 931 800
- WO-A-01/12693
- WO-A-03/014226
- US-A1- 2003 232 950

## Beschreibung

### Technisches Gebiet

Die Erfindung betrifft feuchtigkeitshärtende, silanfunktionelle Polymere enthaltende Zusammensetzungen mit guten Haftungseigenschaften, geeignet als elastische Klebstoffe, Dichtstoffe oder Beschichtungen.

### Stand der Technik

Feuchtigkeitshärtende Zusammensetzungen auf der Basis von silanfunktionellen Polymeren sind bekannt und werden unter andere als elastische Klebstoffe, Dichtstoffe und Beschichtungen eingesetzt. Sie sind frei von Isocyanatgruppen und stellen deshalb eine aus toxikologischer Sicht bevorzugte Alternative zu den Isocyanat-haltigen Polyurethansystemen dar.

Unter den silanfunktionellen Polymeren nehmen jene, welche als Endgruppen α-funktionelle Silangruppen tragen, eine Sonderstellung ein, insbesondere aufgrund ihrer hohen Reaktivität gegenüber Feuchtigkeit. Solche Polymere und Zusammensetzungen daraus wurden beispielsweise beschrieben in WO 03/018658 A1. Die beschriebenen Systeme weisen jedoch für die Anwendung als elastische Klebstoffe, Dichtstoffe oder Beschichtungen Schwächen auf, insbesondere bei der Lagerstabilität sowie, nach der Aushärtung, bei der Dehnbarkeit und der Haftung auf dem Substrat.

WO 03/014226 A1 beschreibt eine Methode, wie die Lagerstabilität solcher Zusammensetzungen durch Zusätze von hochreaktiven α-funktionellen Silanen als chemische Wasserfänger, beispielsweise Alkoxymethyltrialkoxysilanen oder Carbamatomethylalkoxysilanen, verbessert werden kann.

EP 1 529 813 A1 und WO 2005/003201 A2 beschreiben Wege, wie die mechanischen Eigenschaften, insbesondere die Dehnbarkeit, solcher Zusammensetzungen mittels Zusätzen von α-funktionellen Dialkoxysilanen, beziehungsweise von NCO-reaktiven α-funktionellen Silanen, verbessert werden können, ohne Einbussen bei der Härtungscharakteristik zu erleiden.

EP 0 931 800 A1 beschreibt feuchtigkeitshärtende Zusammensetzungen die silanfunktionelle Polymere, Aminosilane und Vinyltrimethoxysilane enthalten.

Inbesondere für die Anwendung als elastische Kleb- oder Dichtstoffe ist es von entscheidender Bedeutung, dass die Zusammensetzungen nach ihrer Aushärtung über eine gute Haftung zu einer möglichst breiten Palette von Substraten verfügen. Ein wesentlicher Nachteil der im Stand der Technik beschriebenen Systeme auf der Basis von silanfunktionellen Polymeren mit αfunktionellen Silangruppen liegt aber gerade darin, dass sie auf vielen Substraten zuwenig gut haften. Insbesondere geht die Haftung zwischen ausgehärteter Zusammensetzung und Substrat bei starker Belastung mit Feuchtigkeit, beispielsweise durch längeres Eintauchen in Wasser oder durch Warmdampfbehandlung (zum Beispiel bei 70 °C und 100% Luftfeuchtigkeit), oft irreversibel verloren.

### Darstellung der Erfindung

Aufgabe der vorliegenden Erfindung ist es daher, feuchtigkeitshärtende Zusammensetzungen auf der Basis von Polymeren mit α-funktionellen Silangruppen zur Verfügung zu stellen, welche verbesserte Haftungseigenschaften aufweisen und sich damit insbesondere für eine Anwendung als Klebstoffe, Dichtstoffe oder Beschichtungen, insbesondere als elastischer Kleb- oder Dichtstoff, eignen.

Überraschenderweise wurde gefunden, dass feuchtigkeitshärtende Zusammensetzungen gemäss Anspruch 1 diese Aufgaben lösen. Insbesondere bleibt die Haftung auf dem Substrat auch bei starker Belastung durch Feuchtigkeit, beispielsweise durch längeres Eintauchen in Wasser oder durch Warmdampfbehandlung (zum Beispiel bei 70 °C und 100% Luftfeuchtigkeit), erhalten.

Weiterhin wurde ein Verfahren des Verklebens oder Abdichtens gemäss Anspruch 19 oder 20 zur Verfügung gestellt, welche zu verklebten oder abgedichteten Artikeln gemäss Anspruch 22, 23 oder 24 führen.

Weitere Ausführungsformen sind Gegenstand der abhängigen Ansprüche.

### Wege zur Ausführung der Erfindung

Gegenstand der Erfindung sind feuchtigkeitshärtende Zusammensetzungen, umfassend
a) mindestens ein silanfunktionelles Polymer **P** mit mindestens zwei Endgruppen der Formel (I) 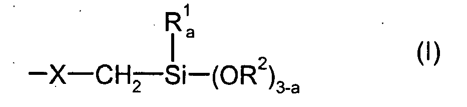 wobei
   R¹ für eine Alkylgruppe mit 1 bis 8 C-Atomen, insbesondere für eine Methyl- oder für eine Ethylgruppe, steht,
   R² für eine Alkylgruppe mit 1 bis 5 C-Atomen, insbesondere für eine Methylgruppe oder für eine Ethylgruppe oder für eine Isopropylgruppe, steht,
   a für 0, 1 oder 2 steht, und
   X für einen zweiwertigen Rest steht, welcher ausgewählt ist aus der Gruppe bestehend aus -NH-CO-N(R³)-, -NH-CO-S-, -NH-CO-O-, -O-CO-NH-, -N(R³)-CO-NH- und -S-CO-NH- ,
   und wobei R³ für ein Wasserstoffatom oder für einen linearen oder verzweigten Kohlenwasserstoffrest mit 1 bis 20 C-Atomen steht, welcher gegebenenfalls cyclische Anteile aufweist, und welcher gegebenenfalls mindestens eine funktionelle Gruppe aufweist, welche ausgewählt ist aus der Gruppe bestehend aus Alkoxysilyl, Ether, Sulfon, Nitril, Nitro, Carbonsäureester, Sulfonsäureester und Phosphonsäureester,
b) mindestens ein Aminosilan **AS** mit mindestens einer primären und/oder einer sekundären Aminogruppe, und
c) mindestens ein Silan **S,** welches ausgewählt ist aus der Gruppe bestehend aus (Meth)acrylsilanen der Formel (II) und Anhydridosilanen der Formel (III), 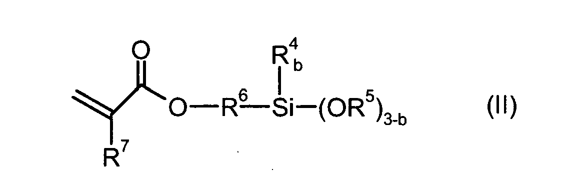 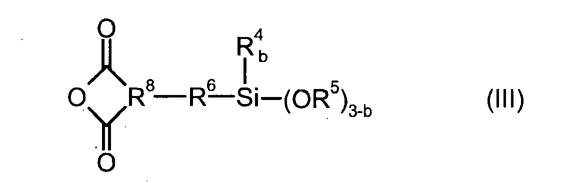
wobei
R⁴ für eine Alkylgruppe mit 1 bis 8 C-Atomen, insbesondere für eine Methyl- oder für eine Ethylgruppe, steht,
R⁵ für eine Alkylgruppe mit 1 bis 5 C-Atomen, insbesondere für eine Methylgruppe oder für eine Ethylgruppe oder für eine Isopropylgruppe, steht,
R⁶ für eine lineare oder verzweigte, gegebenenfalls cyclische, Alkylengruppe mit 2 bis 20, insbesondere 3, C-Atomen, gegebenenfalls mit aromatischen Anteilen, und gegebenenfalls mit Heteroatomen, steht,
R⁷ für ein Wasserstoffatom oder für eine Methylgruppe steht,
R⁸ für einen dreiwertigen Kohlenwasserstoffrest mit 2 bis 5, insbesondere 2, C-Atomen steht, und
b für 0 oder 1, insbesondere für 0, steht.

Der Begriff "Polymer' umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im weiteren auch sogenannte Prepolymere, das heisst reaktive oligomere Voraddukte, deren funktionelle Gruppen am Aufbau von Makromolekülen beteiligt sind.

Mit dem Begriff "Silan" werden im vorliegenden Dokument Organoalkoxysilane bezeichnet, das heisst Verbindungen, in denen zum einen mindestens eine, üblicherweise zwei oder drei Alkoxygruppen direkt an das Silicium-Atom gebunden sind (über eine Si-O-Bindung), und die zum anderen mindestens einen direkt an das Silicium-Atom (über eine Si-C-Bindung) gebundenen organischen Rest aufweisen. Entsprechend dazu bezeichnet der Begriff "Silangruppe" die an den organischen Rest eines Organoalkoxysilans gebundene Silicium-haltige Gruppe. Die Silane, beziehungsweise deren Silangruppen, haben die Eigenschaft, bei Kontakt mit Feuchtigkeit zu hydrolysieren. Dabei bilden sich Organosilanole, das heisst Silicium-organische Verbindungen enthaltend eine oder mehrere Silanolgruppen (Si-OH-Gruppen) und, durch nachfolgende Kondensationsreaktionen, Organosiloxane, das heisst Silicium-organische Verbindungen enthaltend eine oder mehrere Siloxangruppen (Si-O-Si-Gruppen). Der Begriff "silanfunktionell" bezeichnet Verbindungen, insbesondere Polymere, die Silangruppen aufweisen.

Als "α-funktionell" werden Silane oder Silangruppen bezeichnet, deren organischer Rest in α-Stellung (1-Stellung) zum Siliciumatom mit einer funktionellen Gruppe, beispielsweise einer Isocyanat-Gruppe oder einer AminoGruppe, substituiert ist. Entsprechend dazu werden Silane oder Silangruppen als "γ-funktionell" bezeichnet, wenn ihr organischer Rest in γ-Stellung (3-Stellung) zum Siliciumatom mit einer funktionellen Gruppe substituiert ist.

Silanbezeichnungen mit funktionellen Gruppen als Präfixen, wie beispielsweise "Aminosilan" oder "Isocyanatosilan", bezeichnen Silane, welche die genannte funktionelle Gruppe am organischen Rest als Substituenten tragen. Bezeichnungen wie beispielsweise "α-Aminosilan" oder "γ-Aminosilan" deuten an, dass eine genannte funktionelle Gruppe in spezifischer Stellung zum Silicumatom steht.

Der Begriff "Polyurethanpolymer" umfasst sämtliche Polymere, welche nach dem Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate oder Polycarbodiimide.

**Die** feuchtigkeitshärtende Zusammensetzung enthält mindestens ein silanfunktionelles Polymer **P** mit Endgruppen der bereits genannten Formel (I).

Polymere in der Art von Polymer **P** sind beispielsweise in WO 03/018658 beschrieben. Diese Polymere enthalten als Endgruppen α-funktionelle Silangruppen, die aufgrund ihrer elektronischen Struktur die Eigenschaft haben, sehr schnell zu hydrolysieren und weiter zu kondensieren. Dadurch weisen solche Polymere eine sehr hohe Reaktivität gegenüber Feuchtigkeit auf. Sie können deshalb zur Herstellung von feuchtigkeitshärtenden Zusammensetzungen eingesetzt werden, die auch ohne oder mit nur geringen Mengen an Katalysatoren, insbesondere Metallkatalysatoren, hohe Aushärtungsgeschwindigkeiten aufweisen. Insbesondere werden auch mit solchen Polymeren **P,** welche als Endgruppen Di- oder Monoalkoxysilangruppen aufweisen, in feuchtigkeitshärtenden Zusammensetzungen noch genügend hohe Aushärtungsgeschwindigkeiten erhalten, was mit Polymeren, welche entsprechende γ-funktionelle Silangruppen aufweisen, nicht oder nur bei Verwendung unerwünscht hoher Katalysatormengen möglich ist.

Die Polymere **P** tragen bevorzugt Dialkoxysilangruppen, das heisst dass a in Formel (I) bevorzugt 1 ist. Derartige Polymere **P** enthaltende Zusammensetzungen haben den Vorteil, dass sie nach der Aushärtung über besonders gute mechanische Eigenschaften verfügen. Im Vergleich zur Verwendung der Trialkoxysilan-Gruppen tragenden Polymere **P** entsteht bei der Aushärtung des Polymers eine geringere Vernetzungsdichte. Dadurch weisen Zusammensetzungen enthaltend Polymere **P** mit Dialkoxysilangruppen eine speziell hohe Elastizität nach der Aushärtung auf, insbesondere eine speziell hohe Dehnbarkeit bei hoher Reissfestigkeit. Dies ist insbesondere für die Anwendung als elastische Klebstoffe, Dichtstoffe und Beschichtungen vorteilhaft.

Als Polymere **P** werden in einer ersten Ausführungsform Polymere **P1** eingesetzt, bei welchen der zweiwertige Rest X in Formel (I) für -NH-CO-N(R³)- oder -NH-CO-S- oder -NH-CO-O- steht. Die Polymere **P1** sind erhältlich aus der Reaktion eines Isocyanatgruppen enthaltenden Polyurethanpolymers **P11** mit einem α-Amino-, einem α-Mercapto- oder einem α-Hydroxysilan, wobei das Silan im Verhältnis zu den Isocyanatgruppen des Polyurethanpolymers **P11** stöchiometrisch oder leicht überstöchiometrisch eingesetzt wird.

Als α-Aminosilane zur Umsetzung mit einem Isocyanatgruppen enthaltenden Polyurethanpolymer **P11** geeignet sind insbesondere α-Aminosilane mit einer primären Aminogruppe (NH₂-Gruppe), im folgenden auch "primäre α-Aminosilane" genannt, wie (Aminomethyl)trimethoxysilan, (Aminomethyl)-methyldimethoxysilan und (Aminomethyl)dimethylmethoxysilan; α-Aminosilane mit einer sekundären Aminogruppe (NH-Gruppe), im folgenden auch "sekundäre α-Aminosilane" genannt, beispielsweise Analoga der genannten primären α-Aminosilane, welche am Stickstoffatom einen Kohlenwasserstoffrest, beispielsweise eine Methyl-, Ethyl-, Butyl-, Cyclohexyl- oder Phenylgruppe, tragen, wie beispielsweise (N-Cyclohexylaminomethyl)trimethoxysilan, (N-Cyclohexylaminomethyl)methyldimethoxysilan, (N-Phenylaminomethyl)trimethoxysilan und (N-Phenylaminomethyl)methyldimethoxysilan; mehrfach silanfunktionelle sekundäre α-Aminosilane wie beispielsweise Bis(trimethoxysilylmethyl)amin; sowie die Produkte aus der Michael-artigen Addition der genannten primären α-Aminosilane an Michaelakzeptoren wie Maleinsäurediester, Fumarsäurediester, Citraconsäurediester, Acrylsäureester, Methacrylsäureester, Zimtsäureester, Itaconsäuredlester, Vinylphosphonsäurediester, Vinylsulfonsäurearylester, Vinylsulfone, Vinylnitrile, 1-Nitroethylene oder Knoevenagel-Kondensationsprodukte wie beispielsweise solche aus Malonsäurediestern und Aldehyden wie Formaldehyd, Acetaldehyd oder Benzaldehyd; sowie die Analoga aller genannten α-Aminosilane mit Ethoxy- oder Isopropoxygruppen anstelle der Methoxygruppen am Siliciumatom.

Von den genannten Produkten aus einer Michael-artigen Addition sollen insbesondere die Umsetzungsprodukte aus primären α-Aminosilanen mit Maleinsäuredimethyl-, -diethyl- oder -dibutylester, Acrylsäuretetrahydrofurfuryl-, -isobornyl-, -hexyl-, -lauryl-, -stearyl-, 2-hydroxyethyl- oder 3-hydroxypropylester, Phosphonsäuredimethyl-, -diethyl- oder -dibutylester, Acrylnitril, 2-Pentennitril, Fumaronitril oder β-Nitrostyrol erwähnt werden.

Als α-Mercaptosilane zur Umsetzung mit einem Isocyanatgruppen enthaltenden Polyurethanpolymer **P11** geeignet sind beispielsweise (Mercaptomethyl)trimethoxysilan, (Mercaptomethyl)methyldimethoxysilan und (Mercaptomethyl)dimethylmethoxysilan, sowie die Analoga der genannten α-Mercaptosilane mit Ethoxy- oder Isopropoxygruppen anstelle der Methoxygruppen am Siliciumatom.

Als α-Hydroxysilane zur Umsetzung mit einem Isocyanatgruppen enthaltenden Polyurethanpolymer **P11** geeignet sind beispielsweise (Hydroxymethyl)-trimethoxysilan, (Hydroxymethyl)methyldimethoxysilan und (Hydroxymethyl)-dimethylmethoxysilan, sowie die Analoga der genannten α-Hydroxysilane mit Ethoxy- oder Isopropoxygruppen anstelle der Methoxygruppen am Siliciumatom.

Das Isocyanatgruppen enthaltende Polyurethanpolymer **P11** ist beispielsweise erhältlich durch die Umsetzung von mindestens einem Polyol mit mindestens einem Polyisocyanat, insbesondere einem Diisocyanat. Diese Umsetzung kann dadurch erfolgen, dass das Polyol und das Polyisocyanat mit üblichen Verfahren, beispielsweise bei Temperaturen von 50°C bis 100°C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind.

Als Polyole für die Herstellung eines Isocyanatgruppen enthaltenden Polyurethanpolymers **P11** können beispielsweise die folgenden handelsüblichen Polyole, oder beliebige Mischungen davon, eingesetzt werden:
- Polyoxyalkylenpolyole, auch Polyetherpolyole oder Oligoetherole genannt, welche Polymerisationsprodukte von Ethylenoxid, 1,2-Propylenoxid, 1,2- oder 2,3-Butylenoxid, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol und Polyethylenglykole, die isomeren Dipropylenglykole, Tripropylenglykole und Polypropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.

Besonders geeignet sind Polyoxyalkylendiole oder Polyoxyalkylentriole, insbesondere Polyoxypropylendiole oder Polyoxypropylentriole. Speziell geeignet sind Polyoxyalkylendiole oder Polyoxyalkylentriole mit einem Ungesättigtheitsgrad tiefer als 0.02 mEq/g und mit einem Molekulargewicht im Bereich von 1'000 - 30'000 g/mol, sowie Polyoxypropylendiole und -triole mit einem Molekulargewicht von 400 - 8'000 g/mol. Der Begriff "Molekulargewicht" bezeichnet im vorliegenden Dokument das Molekulargewichtsmittel Mₙ.

Ebenfalls besonders geeignet sind sogenannte Ethylenoxid-terminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen.
- Styrol-Acrylnitril- oder Acrylnitril-Methylmethacrylat-gepfropfte Polyetherpolyole.
- Polyesterpolyole, auch Oligoesterole genannt, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydride oder Ester wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Polyacrylat- und Polymethacrylatpolyole.
- Polykohlenwasserstoffpolyole, auch Oligohydrocarbonole genannt, wie beispielsweise polyhydroxyfunktionelle Ethylen-Propylen-, Ethylen-Butylen- oder Ethylen-Propylen-Dien-Copolymere, wie sie beispielsweise von der Firma Kraton Polymers hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, wie beispielsweise solche, die durch Copolymerisation von 1,3-Butadien und Allylalkohol hergestellt werden.
- Polyhydroxyfunktionelle Acrylonitril/Polybutadien-Copolymere, wie sie beispielsweise aus Epoxiden oder Aminoalkoholen und carboxylterminierten Acrylonitril/Polybutadien-Copolymeren (kommerziell erhältlich unter dem Namen Hycar^{®} CTBN von Hanse Chemie) hergestellt werden können.

Diese genannten Polyole weisen ein mittleres Molekulargewicht von 250 - 30'000 g/mol, insbesondere von 1'000 - 30'000 g/mol, und eine mittlere OH-Funktionalität im Bereich von 1.6 bis 3 auf.

Als Polyole bevorzugt sind Polyoxyalkylenpolyole. Als Polyole weiterhin bevorzugt sind Diole. Besonders bevorzugt sind Polyoxyalkylendiole, insbesondere solche mit einem Ungesättigtheitsgrad tiefer als 0.02 mEq/g und einem Molekulargewicht im Bereich von 4'000 - 30'000 g/mol, insbesondere 8'000 - 30'000 g/mol.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole, und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des Polyurethanpolymers **P11** mitverwendet werden.

Als Polyisocyanate für die Herstellung eines Isocyanatgruppen enthaltenden Polyurethanpolymers **P11** können beispielsweise die folgenden handelsübliche Polyisocyanate verwendet werden:

1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3- und -1,4-diisocyanat und beliebige Gemische dieser Isomeren, 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI), 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3- und -1,4-xylylendiisocyanat (m- und p-TMXDI), Bis-(1-Isocyanato-1-methylethyl)-naphthalin, 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Oligomere und Polymere der vorgenannten Isocyanate, sowie beliebige Mischungen der vorgenannten Isocyanate. Bevorzugt sind MDI, TDI, HDI und IPDI.

Als Polymere **P** werden in einer zweiten Ausführungsform Polymere **P2** eingesetzt, bei welchen der zweiwertige Rest X in Formel (I) für -O-CO-NH- oder -N(R³)-CO-NH- oder -S-CO-NH- steht. Die Polymere **P2** sind erhältlich aus der Reaktion eines mindestens zwei gegenüber Isocyanaten reaktiven Gruppen aufweisenden Polymers **P21** mit mindestens einem α-Isocyanatosilan. Diese Umsetzung erfolgt entweder im stöchiometrischen Verhältnis zwischen Isocyanatgruppen und Isocyanat-reaktiven Gruppen, beispielsweise bei Temperaturen von 20 °C bis 100 °C, gegebenenfalls unter Mitverwendung von Katalysatoren, so dass keine Isocyanatgruppen mehr übrig bleiben; oder sie erfolgt mit einem leichten Überschuss an Isocyanatgruppen, wobei das nach der Umsetzung im Polymer verbleibende α-Isocyanatosilan weiter umgesetzt werden kann, beispielsweise mit einem Alkohol. Diese zweite Ausführungsform ist gegenüber der ersten Ausführungsform, welche Polymer **P1** einsetzt, bevorzugt, da die Polymere **P2** bei gleichem Molekulargewicht typischerweise eine tiefere Viskosität aufweisen als die Polymere **P1,** was für die erfindungsgemässe Anwendung vorteilhaft ist.

Als α-Isocyanatosilane geeignet sind beispielsweise (Isocyanatomethyl)trimethoxysilan, (Isocyanatomethyl)methyldimethoxysilan, (Isocyanatomethyl)dimethylmethoxysilan, sowie die Analoga der genannten α-Isocyanatosilane mit Ethoxygruppen oder Isopropoxygruppen anstelle der Methoxygruppen am Siliciumatom. Unter den α-Isocyanatosilanen bevorzugt sind die Dialkoxysilane, insbesondere (Isocyanatomethyl)methyldimethoxysilan und (Isocyanatomethyl)methyldiethoxysilan.

Als mindestens zwei gegenüber Isocyanaten reaktive Gruppen aufweisende Polymere **P21** geeignet sind beispielsweise die im Folgenden aufgezählten Verbindungen:
- Polyole mit einem Molekulargewicht von mindestens 2000 g/mol, wie sie bereits als zur Herstellung eines Polyurethanpolymers **P11** geeignet genannt wurden. Insbesondere geeignet sind Polyoxyalkylenpolyole. Bevorzugt sind Polyole mit einem Molekulargewicht von mindestens 4000 g/mol. Besonders geeignet sind Polyoxypropylendiole und -triole mit einem Ungesättigtheitsgrad tiefer als 0.02 mEq/g und mit einem Molekulargewicht im Bereich von 4'000 - 30'000 g/mol, insbesondere im Bereich von 8'000 - 30'000 g/mol.
- Polyamine mit einem Molekulargewicht von mindestens 2000 g/mol, welche mindestens zwei Aminogruppen aufweisen, wobei die Aminogruppen primär und/oder sekundär sein können, wie beispielsweise Polyoxyalkylen-Polyamine, wie sie beispielsweise unter dem Namen Jeffamine^{®} (von Huntsman Chemicals) erhältlich sind.
- Polyurethanpolymere mit endständigen Hydroxylgruppen, primären oder sekundären Aminogruppen oder Mercaptogruppen mit einem Molekulargewicht von mindestens 2000 g/mol, bevorzugt von mindestens 4000 g/mol.
Polyurethanpolymere mit endständigen Hydroxylgruppen sind beispielsweise erhältlich durch die Umsetzung von mindestens einem Polyol mit mindestens einem Polyisocyanat, wobei die OH-Gruppen im stöchiometrischen Überschuss vorhanden sind, so dass nach der Umsetzung endständige OH-Gruppen verbieiben. Als Polyole und als Polyisocyanate geeignet für diese Umsetzung sind dieselben handelsüblichen Polyole und Polyisocyanate, wie sie bereits als geeignet zur Herstellung von Isocyanatgruppen enthaltenden Polyurethanpolymeren **P11** aufgezählt wurden.

Als Polymere **P21** bevorzugt sind Polyoxyalkylenpolyole mit einem Molekulargewicht von mindestens 4000 g/mol. Besonders bevorzugt sind Polyoxypropylendiole und -triole, insbesondere Polyoxyalkylendiole, mit einem Ungesättigtheitsgrad tiefer als 0.02 mEq/g und mit einem Molekulargewicht im Bereich von 4'000 - 30'000 g/mol, insbesondere im Bereich von 8'000 - 30'000 g/mol. Die Verwendung dieser bevorzugten Polyole hat den Vorteil, dass einfach herzustellende Polymere **P2** mit einer besonders tiefen Viskosität entstehen, die Zusammensetzungen mit besonders guten mechanischen Eigenschaften ergeben.

In einer besonders bevorzugten Ausführungsform sind die Endgruppen des silanfunktionellen Polymers **P** Dialkoxysilangruppen, das heisst, der Wert von a in Formel (I) ist 1, und das silanfunktionelle Polymer **P** ist ein Polymer **P2,** welches erhältlich ist aus der Umsetzung eines α-Isocyanatodialkoxysilans und eines Polymers **P21,** welches ein Polyalkoxyalkylendiol, insbesondere mit einem Ungesättigtheitsgrad von tiefer als 0.02 mEq/g und einem Molekulargewicht zwischen 4'000 und 30'000 g/mol, insbesondere zwischen 8'000 und 30'000 g/mol, ist.

Die feuchtigkeitshärtende Zusammensetzung enthält neben dem Polymer **P** mit α-funktionellen Silangruppen mindestens ein Aminosilan **AS** mit mindestens einer primären und/oder sekundären Aminogruppe.

Die Verwendung von Aminosilanen in feuchtigkeitshärtenden Zusammensetzungen enthaltend silanfunktionelle Polymere ist aus dem Stand der Technik bekannt. Aminosilane beschleunigen einerseits die Aushärtung solcher Systeme und tragen andererseits zu einer Verbesserung der Haftungseigenschaften bei. Auch in Zusammensetzungen enthaltend Polymere **P** ist die Anwesenheit mindestens eines Aminosilans **AS** aus den genannten Gründen vorteilhaft. Eine geeignete Einsatzmenge für ein Aminosilan **AS** liegt im Bereich von 0.1 - 5 Gewichts-%, bevorzugt 0.3 - 3 Gewichts-%, bezogen auf die gesamte Zusammensetzung. Das Aminosilan **AS** wird vorteilhaft in einer Menge von 0.2 - 10 Gewichts-% in Bezug auf das silanfunktionelle Polymer **P** eingesetzt.

Bevorzugte Aminosilane **AS** sind Aminosilane mit mindestens einer primären Aminogruppe (NH₂-Gruppe), wie beispielsweise 3-Aminopropylsilane und deren Derivate, insbesondere 3-Aminopropyltrimethoxysilan und 3-Aminopropyltriethoxysilan. Als Aminosilane **AS** besonders geeignet sind sogenannte Diaminosilane, welche zwei Aminogruppen aufweisen, bevorzugt solche, welche eine primäre Aminogruppe und in γ-Stellung zum Siliciumatom eine sekundäre Aminogruppe (NH-Gruppe) tragen, wie beispielsweise N-(2-Aminoethyl)-3-aminopropyl-silane. Insbesondere geeignete Diaminosilane sind N-(2-Aminoethyl)-3-aminopropyl-trimethoxysilan, N-(2-Aminoethyl)-3-aminopropyl-methyldimethoxysilan, N-(2-Aminoethyl)-3-aminopropyl-triethoxysilan und N-(2-Aminoethyl)-3-aminopropyl-triisopropoxysilan sowie Mischungen der genannten Aminosilane.

Das Aminosilan **AS** ist bevorzugt ausgewählt aus der Gruppe bestehend aus 3-Aminopropyltrimethoxysilan, 3-Aminopropyltriethoxysilan, N-(2-Aminoethyl)-3-aminopropyl-trimethoxysilan, N-(2-Aminoethyl)-3-aminopropylmethyldimethoxysilan und N-(2-Aminoethyl)-3-aminopropyl-triethoxysilan, insbesondere aus der Gruppe bestehend aus N-(2-Aminoethyl)-3-aminopropyl-trimethoxysilan, N-(2-Aminoethyl)-3-aminopropyl-methyldimethoxysilan, N-(2-Aminoethyl)-3-aminopropyl-triethoxysilan und N-(2-Aminoethyl)-3-aminopropyltriisopropoxysilan.

Die feuchtigkeitshärtende Zusammensetzung enthält neben mindestens einem Polymer **P** mit α-funktionellen Silangruppen und mindestens einem Aminosilan **AS** mindestens ein Silan **S,** welches ausgewählt ist aus der Gruppe bestehend aus (Meth)acrylsilanen der bereits erwähnten Formel (II) und Anhydridosilanen der bereits erwähnten Formel (III).

Die Anwesenheit mindestens eines Silans **S** bewirkt eine deutliche Verbesserung der Haftungseigenschaften der ausgehärteten Zusammensetzung, insbesondere nach starker Belastung durch Feuchtigkeit, beispielsweise durch längeres Eintauchen in Wasser oder durch Warmdampfbehandlung (beispielsweise bei 70 °C und 100% Luftfeuchtigkeit). Es wurde gefunden, dass dies insbesondere dadurch erreicht wird, dass ein Silan S im Bereich von 0.1 - 5 Gewichts-%, bevorzugt 0.5 - 4 Gewichts-%, bezogen auf die gesamte Zusammensetzung, eingesetzt wird. Das Silan **S** wird vorteilhaft in einer Menge von 0.2-10 Gewichts-% in Bezug auf das silanfunktionelle Polymer **P** eingesetzt.

Als (Meth)acrylsilane der Formel (II) geeignet sind beispielsweise (3-Methacryloxypropyl)trimethoxysilan, (3-Methacryloxypropyl)methyldimethoxysilan, (3-Methacryloxy-2-methylpropyl)trimethoxysilan, (3-Methacryloxy-2-methylpropyl)methyldimethoxysilan, (4-Methacryloxybutyl)trimethoxysilan, (4-Methacryloxybutyl)methyldimethoxysilan, (4-Methacryloxy-3-methylbutyl)trimethoxysilan, (4-Methacryloxy-3-methylbutyl)methyldimethoxysilan, (4-Methacryloxy-3,3-dimethylbutyl)trimethoxysilan, (4-Methacryloxy-3,3-dimethylbutyl)-methyldimethoxysilan, (2-Methacryloxyethyl)trimethoxysilan, (2-Methacryloxyethyl)methyldimethoxysilan, (7-Methacryloxy-4oxaheptyl)trimethoxysilan, (7-Methacryloxy-4oxaheptyl)methyldimethoxysilan; sowie die Analoga aller genannten Methacrylsilane mit einer Acryl- anstelle der Methacrylgruppe; sowie die Analoga der genannten (Meth)acrylsilane mit Ethoxy- oder Isopropoxygruppen anstelle der Methoxygruppen am Siliciumatom.

Bevorzugt sind (3-Acryloxypropyl)trimethoxysilan, (3-Methacryloxypropyl)trimethoxysilan, (3-Methacryloxypropyl)triethoxysilan, (3-Methacryloxypropyl)triisopropoxysilan, (3-Methacryloxypropyl)methyldimethoxysilan und (3-Methacryloxypropyl)methyldiethoxysilan.

Besonders bevorzugt sind (3-Methacryloxypropyl)trimethoxysilan, (3-Methacryloxypropyl)triethoxysilan und (3-Methacryloxypropyl)triisopropoxysilan.

Als Anhydridosilane der Formel (III) geeignet sind beispielsweise 3-(Trimethoxysilyl)propylbernsteinsäureanhydrid, 3-(Triethoxysilyl)propylbernsteinsäureanhydrid, 3-(Dimethoxymethylsilyl)propylbernsteinsäureanhydrid und 3-(Diethoxymethylsilyl)propylbernsteinsäureanhydrid. Insbesondere geeignet sind (Trimethoxysilyl)propylbernsteinsäureanhydrid oder 3-(Triethoxysilyl)-propylbernsteinsäureanhydrid, bevorzugt 3-(Triethoxysilyl)propylbernsteinsäureanhydrid.

Es ist davon auszugehen, dass in der Zusammensetzung das Aminosilan **AS** und das Silan **S** nach einer gewissen Zeit des Lagerns und/oder während der Applikation zumindest teilweise Addukte, wie sie für primäre Amine und (Meth)acrylate und Anhydride bekannterweise auftreten können, gebildet werden.

Derartige Addukte weisen insbesondere die folgende Struktur gemäss Formel (IV) und (V) auf: 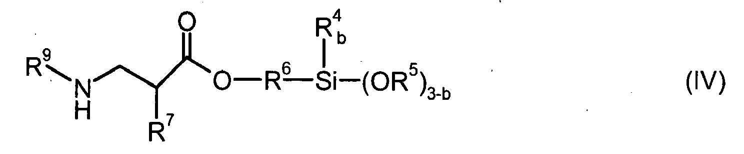 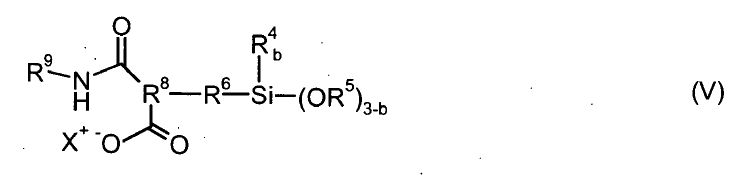 wobei R⁹ der Rest des Aminosilans **AS** ohne die primäre Aminogruppe und X⁺ ein Kation, insbesondere eine Proton oder ein Ammonium, insbesondere ein Ammonium eines Amins oder eines Aminosilans **AS,** darstellt.

Die beobachtete haftungsverbessernde Wirkung der Silane **S,** beziehungsweise der Addukte der Silane **S** mit den Aminosilanen **AS,** im Zusammenhang mit Polymeren enthaltend α-funktionelle Silangruppen ist überraschend und nicht naheliegend.

Die erfindungsgemässe feuchtigkeitshärtende Zusammensetzung kann zusätzlich zu mindestens einem silanfunktionellen Polymer **P,** mindestens einem Aminosilan **AS** und mindestens einem Silan **S** weitere Komponenten enthalten. Es ist jedoch vorteilhaft, darauf zu achten, dass sie die Lagerstabilität nicht beeinträchtigen, das heisst, dass sie während der Lagerung die zur Vernetzung führende Reaktion der in der Zusammensetzung enthaltenen Silangruppen nicht in signifikantem Ausmass auslösen. Insbesondere bedeutet dies, dass solche weiteren Komponenten bevorzugt kein oder höchstens Spuren von Wasser enthalten. Als zusätzliche Komponenten können unter anderem die folgenden Hilfs- und Zusatzmittel vorhanden sein:

Weichmacher, beispielsweise Ester organischer Carbonsäuren oder deren Anhydride, wie Phthalate, beispielsweise Dioctylphthalat oder Diisodecylphthalat, Adipate, beispielsweise Dioctyladipat, und Sebacate, Polyole, beispielsweise Polyoxyalkylenpolyole oder Polyesterpolyole, organische Phosphor- und Sulfonsäureester oder Polybutene; Lösemittel; anorganische und organische Füllstoffe, zum Beispiel gemahlene oder gefällte Calciumcarbonate, welche gegebenenfalls mit Stearaten beschichtet sind, insbesondere feinteiliges beschichtetes Calciumcarbonat, Russe, insbesondere industriell hergestellte Russe (im Folgenden als "Russ" bezeichnet), Kaoline, Aluminiumoxide, Kieselsäuren, insbesondere hochdisperse Kieselsäuren aus Pyrolyseprozessen, PVC-Pulver oder Hohlkugeln, Fasern, beispielsweise aus Polyethylen; Pigmente; Katalysatoren, beispielsweise Organozinnverbindungen wie Dibutylzinndilaurat und Dibutylzinndiacetylacetonat, Bismut-organische Verbindungen oder Bismut-Komplexe, aminogruppenhaltige Verbindungen, beispielsweise 1,4-Diazabicyclo[2.2.2]octan und 2,2'-Dimorpholinodiethylether; Rheologie-Modifizierer wie beispielsweise Verdickungsmittel, zum Beispiel Harnstoffverbindungen, Polyamidwachse, Bentonite oder pyrogene Kieselsäuren; weitere Haftvermittler, beispielsweise Epoxysilane; Vernetzer, beispielsweise silanfunktionelle Oligo- und Polymere; Trocknungsmittel, zum Beispiel Vinyltrimethoxysilan, α-funktionelle Silane wie N-(Silylmethyl)-O-methylcarbamate, insbesondere N-(Methyldimethoxysilylmethyl)-O-methyl-carbamat, (Methacryloxymethyl)silane, Methoxymethylsilane, N-Phenyl-, N-Cyclohexyl-und N-Alkylsilane, Orthoameisensäureester, Calciumoxid oder Molekularsiebe; Stabilisatoren gegen Wärme, Licht- und UV-Strahlung; flammhemmende Substanzen; oberflächenaktive Substanzen wie beispielsweise Netzmittel, Verlaufsmittel, Entlüftungsmittel oder Entschäumer; Fungizide oder das Pilzwachstum hemmende Substanzer; sowie weitere, in feuchtigkeitshärtenden Zusammensetzungen üblicherweise eingesetzte Substanzen.

Bevorzugt enthält die feuchtigkeitshärtende Zusammensetzung Weichmacher, Füllstoffe und Katalysatoren. Als Füllstoffe bevorzugt sind Russe, Calciumcarbonate, insbesondere feinteilige beschichtete Calciumcarbonate, hochdisperse Kieselsäuren aus Pyrolyseprozessen, sowie Kombinationen aus diesen Füllstoffen. Bevorzugt enthält die Zusammensetzung zwischen 5 und 35 Gewichts-%, insbesondere zwischen 10 und 20 Gewichts-%, Russ.

Die beschriebene feuchtigkeitshärtende Zusammensetzung wird unter Ausschluss von Feuchtigkeit aufbewahrt. Sie ist lagerstabil, d.h. sie kann unter Ausschluss von Feuchtigkeit in einer geeigneten Verpackung oder Anordnung, wie beispielsweise einem Fass, einem Beutel oder einer Kartusche, über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändert. Üblicherweise wird die Lagerstabilität über die Messung der Viskosität, der Auspressmenge oder der Auspresskraft ermittelt.

Die Zusammensetzung enthält vorzugsweise keine freien Isocyanatgruppen. Eine derartige isocyanatfreie Zusammensetzung ist vom toxikologischen Standpunkt her vorteilhaft.

Bei der Applikation der beschriebenen feuchtigkeithärtenden Zusammensetzung auf mindestens einen Festkörper oder Artikel kommen die Silangruppen des Polymers und der Silane in Kontakt mit Feuchtigkeit. Die Silangruppen haben die Eigenschaft, bei Kontakt mit Feuchtigkeit zu hydrolysieren. Dabei bilden sich Organosilanole (Silicium-organische Verbindungen enthaltend eine oder mehrere Silanolgruppen, Si-OH-Gruppen) und, durch nachfolgende Kondensationsreaktionen, Organosiloxane (Silicium-organische Verbindungen enthaltend eine oder mehrere Siloxangruppen, Si-O-Si-Gruppen). Als Ergebnis dieser Reaktionen, welche durch den Einsatz von Katalysatoren beschleunigt werden können, härtet die Zusammensetzung schliesslich aus; dieser Prozess wird auch als Vernetzung bezeichnet. Das für die Aushärtungsreaktion benötigte Wasser kann entweder aus der Luft stammen (Luftfeuchtigkeit), oder aber die Zusammensetzung kann mit einer Wasser enthaltenden Komponente in Kontakt gebracht werden, zum Beispiel durch Bestreichen, beispielsweise mit einem Abglättmittel, oder durch Besprühen, oder es kann der Zusammensetzung bei der Applikation eine Wasser enthaltende Komponente zugesetzt werden, zum Beispiel in Form einer wasserhaltigen Paste, die, beispielsweise über einen Statikmischer, eingemischt wird.

Die beschriebene Zusammensetzung härtet bei Kontakt mit Feuchtigkeit schnell aus. Sie verfügt im ausgehärteten Zustand über eine hohe mechanische Festigkeit bei einer hohen Dehnbarkeit, sowie über gute Haftungseigenschaften, auch nach starker Belastung mit Feuchtigkeit. Dadurch eignet sie sich für eine Vielzahl von Anwendungen, insbesondere als elastischer Klebstoff, als elastischer Dichtstoff oder als elastische Beschichtung. Insbesondere eignet sie sich für Anwendungen , welche eine hohe Aushärtungsgeschwindigkeit erfordern und hohe Anforderungen an die Festigkeit und die Früh- und Endfestigkeit sowie Dehnbarkeit stellen, bei gleichzeitig hohen Anforderungen an die Haftungseigenschaften. Speziell geeignet ist sie für Anwendungen, bei welchen eine Belastung der ausgehärteten Zusammensetzung mit Feuchtigkeit vorliegt, insbesondere mit einer Kombination aus Wärme und Feuchtigkeit.

Geeignete Anwendungen sind beispielsweise das Verkleben von Bauteilen im Hoch- oder Tiefbau und bei der Fertigung oder Reparatur von industriellen Gütern oder Konsumgütern, insbesondere von Fenstern, Haushaltmaschinen oder Transportmitteln wie Fahrzeugen zu Wasser oder zu Lande, bevorzugt Automobile, Busse, Lastkraftwagen, Züge oder Schiffe; das Abdichten von Fugen, Nähten oder Hohlräumen in der industriellen Fertigung oder Reparatur, oder im Hoch- oder Tiefbau; sowie das Beschichten von diversen Substraten, beispielsweise als Anstrich, Lack, Primer, Versiegelung oder Schutzbeschichtung, oder als Bodenbelag, beispielsweise für Büros, Wohnbereiche, Spitäler, Schulen, Lagerhallen und Parkgaragen.

In einer bevorzugten Ausführungsform wird die beschriebene Zusammensetzung als elastischer Klebstoff oder Dichtstoff eingesetzt.

Als elastischer Klebstoff weist die Zusammensetzung typischerweise eine Bruchdehnung von mindestens 200% und als elastischer Dichtstoff eine solche von mindestens 500% bei Raumtemperatur auf.

In der Anwendung als Klebstoff wird die Zusammensetzung auf ein Substrat **S1** und/oder ein Substrat **S2** appliziert. Der Klebstoff kann somit auf das eine oder auf das andere Substrat oder auf beide Substrate appliziert werden. Danach werden die zu verklebenden Teile gefügt, worauf der Klebstoff aushärtet. Hierbei ist darauf zu achten, dass das Fügen der Teile innerhalb der so genannten Offenzeit erfolgt, um zu gewährleisten, dass beide Fügeteile verlässlich miteinander verklebt werden.

In der Anwendung als Dichtstoff wird die Zusammensetzung zwischen die Substrate **S1** und **S2** appliziert und anschliessend erfolgt die Aushärtung. Üblicherweise wird der Dichtstoff in eine Fuge eingepresst.

Die Applikation des Kleb- oder Dichtstoffes erfolgt vorzugsweise gleichmässig.

In beiden Anwendungen kann das Substrat **S1** gleich oder verschieden von Substrat S2 sein.

Geeignete Substrate **S1** oder **S2** sind beispielsweise anorganische Substrate wie Glas, Glaskeramik, Beton, Mörtel, Backstein, Ziegel, Gips und Natursteine wie Granit oder Marmor; Metalle oder Legierungen wie Aluminium, Stahl, Buntmetalle, verzinkte Metalle; organische Substrate wie Holz, Kunststoffe wie PVC, Polycarbonate, PMMA, Polyester, Epoxidharze; beschichtete Substrate wie pulverbeschichtete Metalle oder Legierungen; sowie Farben und Lacke, insbesondere Automobildecklacke.

Die Substrate können bei Bedarf vor dem Applizieren des Kleb- oder Dichtstoffes vorbehandelt werden. Derartige Vorbehandlungen umfassen insbesondere physikalische und/oder chemische Reinigungsverfahren, beispielsweise Schleifen, Sandstrahlen, Bürsten oder dergleichen, oder Behandeln mit Reinigern oder Lösemitteln oder das Aufbringen eines Haftvermittlers, einer Haftvermittlerlösung oder eines Primers.

Nach dem Verkleben oder Abdichten der Substrate **S1** und **S2** mittels einer erfindungsgemässen Zusammensetzung wird ein verklebter oder abgedichteter Artikel erhalten. Ein derartiger Artikel kann ein Bauwerk, insbesondere ein Bauwerk des Hoch- oder Tiefbaus, oder ein Transportmittel sein. Bevorzugt ist der Artikel ein Transportmittel, beispielsweise ein Fahrzeug zu Wasser oder zu Lande, insbesondere ein Automobil, ein Bus, ein Lastkraftwagen, ein Zug oder ein Schiff, oder ein Anbauteil davon. Besonders bevorzugt ist der verklebte oder abgedichtete Artikel ein Transportmittel, insbesondere ein Automobil, oder ein Anbauteil eines Transportmittels, insbesondere eines Automobils.

Falls die Zusammensetzung als Klebstoff für elastische Verklebungen im Fahrzeugbau verwendet wird, weist sie bevorzugt eine pastöse Konsistenz mit strukturviskosen Eigenschaften auf. Ein solcher Klebstoff wird mittels einer geeigneten Vorrichtung auf das Substrat aufgetragen, bevorzugt in Form einer Raupe, wobei diese eine im Wesentlichen runde oder dreieckige Querschnittsfläche aufweisen kann. Geeignete Methoden zum Auftragen des Klebstoffes sind beispielsweise die Applikation aus handelsüblichen Kartuschen, welche manuell oder mittels Druckluft betrieben werden, oder aus einem Fass oder Hobbock mittels einer Förderpumpe oder eines Extruders, gegebenenfalls mittels eines Applikations-Roboters. Ein Klebstoff mit guten Applikationseigenschaften weist eine hohe Standfestigkeit und einen kurzen Fadenzug auf. Das heisst, er bleibt nach der Applikation in der applizierten Form stehen, fliesst also nicht auseinander, und zieht nach dem Absetzen des Applikationsgerätes keinen oder nur einen sehr kurzen Faden, so dass das Substrat nicht verschmutzt wird.

Elastische Verklebungen im Fahrzeugbau sind beispielsweise das Ankleben von Teilen, wie Kunststoffabdeckungen, Zierleisten, Flansche, Stosstangen, Führerkabinen oder andere Anbauteile, an die lackierte Karosserie eines Transportmittels, oder das Einkleben von Scheiben in die Karosserie. Als Fahrzeuge genannt werden sollen beispielsweise Automobile, Lastkraftwagen, Busse, Schienenfahrzeuge und Schiffe

Es zeigte sich, dass die erfindungsgemässe Zusammensetzung enthaltend mindestens ein Polymer **P,** mindestens ein Aminosilan **AS** und mindestens ein Silan **S** in Form eines (Meth)acrylsilans der Formel (II) oder eines Anhydridosilans der Formel (III) überraschend gute Haftungseigenschaften aufweist. Im Vergleich mit einer Zusammensetzung ohne Silan **S** weist sie insbesondere bessere Haftungseigenschaften nach einer starken Belastung der Klebefläche mit Feuchtigkeit, beispielsweise durch längeres Eintauchen in Wasser oder durch Warmdampfbehandlung (zum Beispiel 70 °C /100% Luftfeuchtigkeit), auf.

### Beispiele

### Beschreibung der Prüfmethoden

Die **Zugfestigkeit** und die **Bruchdehnung** wurden bestimmt nach DIN EN 53504 (Zuggeschwindigkeit: 200 mm/min) an während 7 Tagen im Normklima (23±1 °C, 50±5% relative Luftfeuchtigkeit) ausgehärteten Filmen mit einer Schichtdicke von 2 mm.

Die **Zugscherfestigkeit** wurde gemessen in Anlehnung an DIN EN 1465. Es wurden Floatglasplättchen verwendet, welche mit Sika® Cleaner-205 (erhältlich bei Sika Schweiz AG) vorgängig gereinigt wurden. Die Glasplättchen wurden in der in der Norm beschriebenen Art angeordnet, sodass eine mit Klebstoff gefüllte Überlappung der Dimensionen 10 bis 12 mm Breite, 25 mm Länge und 4 bis 5 mm Dicke entstand. Zwecks Aushärtung wurde der Prüfling während 7 Tagen bei Normklima (23±1 °C, 50±5% relative Luftfeuchtigkeit) gelagert. Anschliessend wurde der Prüfling mit einer Querjochgeschwindigkeit von 20 mm/min bis zum Bruch auseinander gezogen.

Die **Haftungen** wurden folgendermassen bestimmt:

Zur Prüfung der Haftung wurden folgende Substrate in Form von Plättchen benutzt: Aluminium AlMg3, Glaskeramik VSG, Glaskeramik Bi-Basis ESG und Floatglas, erhältlich bei der Firma Rocholl, Schönbrunn, Deutschland. Jedes Plättchen wurde mit Sika® Cleaner-205 gereinigt. Nach einer Ablüftzeit von 10 Minuten wurden zwei Raupen der jeweiligen Polyurethanzusammensetzung aus einer Kartusche auf jedes Plättchen aufgetragen. Das mit den Raupen beschichtete Plättchen wurde dann während 7 Tagen im Normklima (23±1°C, 50±5% relative Luftfeuchtigkeit) gelagert, worauf die Haftung ein erstes Mal geprüft wurde (erste Raupe). Anschliessend wurde das Plättchen während 7 Tagen vollständig eingetaucht in Wasser bei Raumtemperatur gelagert, worauf die Haftung ein zweites Mal geprüft wurde (zweite Raupe). Zur Prüfung der Haftung wurde die ausgehärtete Raupe jeweils an einem Ende knapp über der Oberfläche des Plättchens (Klebefläche) eingeschnitten. Das eingeschnittene Ende der Raupe wurde von Hand festgehalten und dann vorsichtig und langsam, schälend in Richtung des anderen Raupenendes, von der Plättchenoberfläche gezogen. Wenn dabei die Haftung so stark war, dass das Raupenende beim Ziehen abzureissen drohte, wurde mittels eines Cutters ein Schnitt senkrecht zur Raupenziehrichtung bis auf die blanke Oberfläche des Plättchens angebracht und die Raupe so ein Stück weit abgelöst. Solche Schnitte wurden, wenn nötig, beim Weiterziehen im Abstand von 2 bis 3 mm wiederholt. Auf diese Weise wurde die gesamte Raupe vom Plättchen gezogen bzw. geschnitten. Die Bewertung der Hafteigenschaften erfolgte anhand dem nach dem Abziehen der Raupe auf der Substratoberfläche zurückbleibenden ausgehärteten Klebstoff (Kohäsionsbruch), und zwar durch Abschätzen des kohäsiven Anteils der Haftfläche, gemäss folgender Skala:
1 = mehr als 95% Kohäsionsbruch
2 = 75 - 95% Kohäsionsbruch
3 = 25 - 75% Kohäsionsbruch
4 = weniger als 25% Kohäsionsbruch
Testresultate mit Kohäsionsbruchwerten von weniger als 75%, also Werte von 3 und 4, gelten als ungenügend.

Die **OH-Zahl** des verwendeten Polyols wurde bestimmt durch die Umsetzung mit einem Ueberschuss Isophorondiisocyanat und anschliessender Rücktitration der unreagierten Isocyanatgruppen. Der Wert der OH-Zahl wurde dabei nicht um das im Polyol enthaltene Wasser korrigiert. Die Angabe der OH-Zahl erfolgt also inklusive Wasser.

**Verwendete Abkürzungen in der Tabelle 1**

| Vgl. | Vergleich |
|---|---|
| Geniosil^{®} GF 31 | (3-Methacryloxypropyl)trimethoxysilan (Wacker) |
| Geniosil^{®} GF 20 | 3-(Triethoxsilyl)propylbernsteinsäureanhydrid (Wacker) |
| Geniosil^{®} GF 82 | (3-Glycidoxypropyl)triethoxysilan (Wacker) |
| Silan IO-Triethoxy | Isooctyltriethoxysilan (Wacker) |
| Geniosil^{®} GF9 | N-(2-Aminoethyl)-3-aminopropyl-trimethoxysilan (Wacker) |

### a) Herstellung eines Polymers mit α-funktionellen Silangruppen

### Polymer 1

Unter Feuchtigkeitsausschluss wurden 1000 g Polyol Acclaim^{®} 18200 (Bayer; low monol Polyoxypropylendiol, mittleres Molekulargewicht ca. 18'000 g/mol, OH-Zahl 7.34 mg KOH/g) und 21.1 g Geniosil^{®} XL 42 (Wacker; Isocyanatomethyl-methyldimethoxysilan) bei 90 °C umgesetzt, bis mittels FT-IR-Spektroskopie kein freies Isocyanat mehr nachgewiesen werden konnte. Das entstandene Polymer mit α-funktionellen Silangruppen wurde auf Raumtemperatur abgekühlt und unter Ausschluss von Feuchtigkeit aufbewahrt. Das klare, farblose Produkt hatte eine Viskosität von 40 Pas bei 20 °C.

### b) Herstellung von Klebstoffen

### Basisformulierung

In einem Vakuummischer wurden 3250 g Polymer 1, 1170 g Diisodecylphthalat (DIDP; Palatinol^{®} Z, BASF), 65 g Geniosil^{®} XL 65 (Wacker; N-(Methyldimethoxysilylmethyl)-O-methyl-carbamat), 975 g feinteiliges beschichtetes Calciumcarbonat (Socal^{®} U1S2, Solvay, getrocknet), 975 g Russ (getrocknet), 65 g Geniosil^{®} GF 9 (Wacker; N-(2-Aminoethyl)-3-aminopropyl-trimethoxysilan) und 0.4 g Di-n-butyl-zinndilaurat zu einer homogenen Paste verarbeitet, welche unter Ausschluss von Feuchtigkeit aufbewahrt wurde.

### Beispiele 1 bis 7

In einem Vakuummischer wurde die Basisformulierung mit den in der Tabelle 1 für die Beispiele 1 bis 7 angegebenen Silane bei Raumtemperatur homogen vermischt und die so erhaltenen Klebstoffe unter Ausschluss von Feuchtigkeit in Kartuschen abgefüllt.

Von diesen Zusammensetzungen wurden am Folgetag, wie beschrieben, Prüfkörper angefertigt. Die Zusammensetzungen und Resultate dieser Proben nach der beschriebenen Aushärtung und Lagerung sind in Tabelle 1 zusammengestellt.

Aus der Tabelle 1 ist ersichtlich, dass alle Klebstoffe der Beispiele 1 bis 7 im ausgehärteten Zustand sehr gute mechanische Eigenschaften aufweisen.

Der Klebstoff des Vergleichsbeispiels 1, welcher kein Silan **S** enthält, weist auf allen geprüften Substraten nach 7 Tagen Lagerung im Normklima eine gute Haftung auf. Wird der Prüfkörper jedoch anschliessend für 7 Tage bei Raumtemperatur ins Wasser gelegt, so ist die Haftung nicht mehr gegeben.

Die erfindungsgemässen Klebstoffe der Beispiele 2, 3 und 4 zeigen eine Verbesserung der Haftung nach Wasserlagerung im Vergleich mit Beispiel 1. Die Klebstoffe der Vergleichsbeispiele 5, 6 und 7 zeigen ein ähnliches Haftungsverhalten wie im Beispiel 1.

**Tabelle 1: Zusammensetzung und Prüfergebnisse der Klebstoffe der Beispiele 2 - 4 und der Vergleichsbeispiele 1 und 5 - 7. Mengenangaben sind in Gewichtsteilen.**

| **Beispiel** | **1** | **2** | **3** | **4** | **5** | **6** | **7** |
|---|---|---|---|---|---|---|---|
| | (Vgl.) | | | | (Vgl.) | (Vgl.) | (Vgl.) |
| Basisformulierung | 100.0 | 99.0 | 98.0 | 99.0 | 99.0 | 99.0 | 99.0 |
| Geniosil^{®} GF 31 | - | 1.0 | 2.0 | - | - | - | - |
| Geniosil^{®} GF 20 | - | - | - | 1.0 | - | - | - |
| Geniosil^{®} GF 82 | - | - | - | - | 1.0 | - | - |
| Silan IO-Triethoxy | - | - | - | - | - | 1.0 | - |
| Geniosil^{®} GF 9 | - | - | - | - | - | - | 1.0 |

| **Ergebnisse der mechanischen Prüfungen:** | | | | | | | |
|---|---|---|---|---|---|---|---|
| Zugfestigkeit [MPa] | 7.2 | 6.9 | 7.0 | 5.3 | 6.6 | 6.9 | 6.9 |
| Bruchdehnung [%] | 900 | 740 | 750 | 450 | 640 | 850 | 710 |
| Zugscherfestigkeit [MPa] | 3.4 | 4.3 | 4.1 | 4.0 | 5.0 | 3.3 | 3.8 |

| **Ergebnisse der Haftprüfungen :** | | | | | | | |
|---|---|---|---|---|---|---|---|
| Aluminium AlMg3 | 14 | 12 | 12 | 11 | 14 | 14 | 14 |
| Glaskeramik VSG | 14 | 14 | 11 | 11 | 14 | 14 | 14 |
| Glaskeramik ESG | 14 | 14 | 12 | 11 | 14 | 24 | 24 |
| Floatglas | 14 | 12 | 11 | 11 | 13 | 14 | 14 |

| | | | | | | | |
|---|---|---|---|---|---|---|---|
| 1. Zahl: nach 7 Tagen Lagerung im Normklima; 2. Zahl: nach 7 Tagen Lagerung im Normklima und weiteren 7 Tagen Wasserlagerung | | | | | | | |

## Patentansprüche

1. Feuchtigkeitshärtende Zusammensetzung umfassend
a) mindestens ein silanfunktionelles Polymer P mit mindestens zwei Endgruppen der Formel (I) 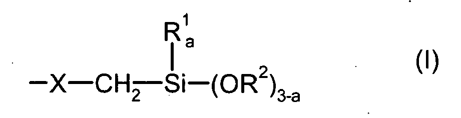 wobei
R¹ für eine Alkylgruppe mit 1 bis 8 C-Atomen, insbesondere für eine Methyl- oder für eine Ethylgruppe, steht;
R² für eine Alkylgruppe mit 1 bis 5 C-Atomen, insbesondere für eine Methylgruppe oder für eine Ethylgruppe oder für eine Isopropylgruppe, steht;
a für 0, 1 oder 2 steht, und
X für einen zweiwertigen Rest steht, welcher ausgewählt ist aus der Gruppe bestehend aus -NH-CO-N(R³)-, -NH-CO-S-, -NH-CO-O-, -O-CO-NH-, -N(R³)-CO-NH- und -S-CO-NH-,
wobei R³ für ein Wasserstoffatom oder für einen linearen oder verzweigten Köhlenwasserstoffrest mit 1 bis 20 C-Atomen steht, welcher gegebenenfalls cyclische Anteile aufweist, und welcher gegebenenfalls mindestens eine funktionelle Gruppe aufweist, welche ausgewählt ist aus der Gruppe bestehend aus Alkoxysilyl, Ether, Sulfon, Nitril, Nitro, Carbonsäureester, Sulfonsäureester und Phosphonsäureester;
b) mindestens ein Aminosilan **AS** mit mindestens einer primären und/oder sekundären Aminogruppe;
c) mindestens ein Silan **S,** welches ausgewählt ist aus der Gruppe bestehend aus (Meth)acrylsilanen der Formel (II) und Anhydridosilanen der Formel (III), 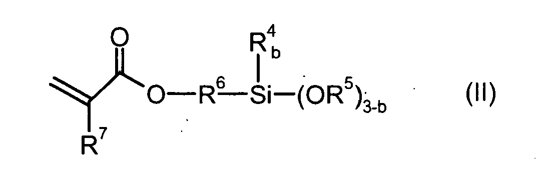 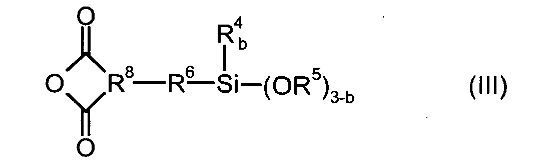
wobei
R⁴ für eine Alkylgruppe mit 1 bis 8 C-Atomen, insbesondere für eine Methyl- oder für eine Ethylgruppe, steht;
R⁵ für eine Alkylgruppe mit 1 bis 5 C-Atomen, insbesondere für eine Methylgruppe oder für eine Ethylgruppe oder für eine Isopropylgruppe; steht;
R⁶ für eine lineare oder verzweigte, gegebenenfalls cyclische, Alkylengruppe mit 2 bis 20, insbesondere 3, C-Atomen, gegebenenfalls mit aromatischen Anteilen, und gegebenenfalls mit Heteroatomen, steht;
R⁷ für ein Wasserstoffatom oder für eine Methylgruppe steht,
R⁸ für einen dreiwertigen Kohlenwasserstoffrest mit 2 bis 5, insbesondere 2, C-Atomen steht, und
b für 0 oder 1, insbesondere für 0, steht.

2. Feuchtigkeitshärtende Zusammensetzung gemäss Anspruch 1, **dadurch gekennzeichnet, dass** das Aminosilan **AS** ausgewählt ist aus der Gruppe bestehend aus 3-Aminopropyltrimethoxysilan, 3-Aminopropyltriethoxysilan, N-(2-Aminoethyl)-3-aminopropyl-trimethoxysilan, N-(2-Aminoethyl)-3-aminopropyl-methyldimethoxysilan, N-(2-Aminoethyl)-3-aminopropyltriethoxysilan und N-(2-Aminoethyl)-3-aminopropyl-triisopropoxysilan, insbesondere aus der Gruppe bestehend aus N-(2-Aminoethyl)-3-aminopropyl-trimethoxysilan, N-(2-Aminoethyl)-3-aminopropyl-methyldimethoxysilan, N-(2-Aminoethyl)-3-aminopropyl-triethoxysilan und N-(2-Aminoethyl)-3-aminopropyl-triisopropoxysilan.

3. Feuchtigkeitshärtende Zusammensetzung gemäss einem der vorhergehenden Ansprüche, **dadurch gekennzeichnet, dass** das Silan S (3-Methacryloxypropyl)trimethoxysilan, (3-Methacryloxypropyl)triethoxysilan oder (3-Methacryloxypropyl)triisopropoxysilan, ist.

4. Feuchtigkeitshärtende Zusammensetzung gemäss einem der Ansprüche 1 oder 2, **dadurch gekennzeichnet, dass** das Silan **S** 3-(Trimethoxysilyl)-propylbernsteinsäureanhydrid oder 3-(Triethoxysilyl)propylbernsteinsäureanhydrid, insbesondere 3-(Triethoxysilyl)propylbernsteinsäureanhydrid, ist.

5. Feuchtigkeitshärtende Zusammensetzung gemäss einem der vorhergehenden Ansprüche, **dadurch gekennzeichnet, dass** a = 1 ist.

6. Feuchtigkeitshärtende Zusammensetzung gemäss einem der vorhergehenden Ansprüche, **dadurch gekennzeichnet, dass** das silanfunktionelle Polymer **P** ein silanfunktionelles Polymer **P1** ist, bei welchem X in Formel (I) für -NH-CO-N(R³)- oder -NH-CO-S- oder -NH-CO-O- steht, und welches erhältlich ist aus der Reaktion eines Isocyanatgruppen enthaltenden Polyurethanpolymers **P11,** wie es durch die Umsetzung von mindestens einem Polyisocyanat mit mindestens einem Polyol erhalten wird, mit einem α-Amino-, einem α-Mercapto- oder einem α-Hydroxysilan, wobei das Silan im Verhältnis zu den Isocyanatgruppen des Polyurethanpolymers **P11** stöchiometrisch oder leicht überstöchiometrisch eingesetzt wird.

7. Feuchtigkeitshärtende Zusammensetzung gemäss einem der Ansprüche 1 bis 5, **dadurch gekennzeichnet, dass** das silanfunktionelle Polymer **P** ein silanfunktionelles Polymer **P2** ist, bei welchem X in Formel (I) für -O-CO-NH- oder -N(R³)-CO-NH- oder -S-CO-NH- steht, und welches erhältlich ist aus der Reaktion eines mindestens zwei gegenüber Isocyanaten reaktiven Gruppen aufweisenden Polymers **P21** mit mindestens einem α-Isocyanatosilan.

8. Feuchtigkeitshärtende Zusammensetzung gemäss Anspruch 7, **dadurch gekennzeichnet, dass** das mindestens zwei gegenüber Isocyanaten reaktiven Gruppen aufweisende Polymer **P21** ein Polyol, insbesondere ein Polyoxyalkylenpolyol, bevorzugt mit einem Ungesättigtheitsgrad von tiefer als 0.02 mEq/g und einem Molekulargewicht zwischen 4'000 und 30'000 g/mol, insbesondere zwischen 8'000 und 30'000 g/mol, ist.

9. Feuchtigkeitshärtende Zusammensetzung gemäss Anspruch 7 oder 8, **dadurch gekennzeichnet, dass** das α-Isocyanatosilan (Isocyanatomethyl)-methyldimethoxysilan oder (Isocyanatomethyl)methyldiethoxysilan ist.

10. Feuchtigkeitshärtende Zusammensetzung gemäss einem der Ansprüche 1 bis 5, **dadurch gekennzeichnet, dass** a = 1 ist und dass das silanfunktionelle Polymer **P** ein silanfunktionelles Polymer **P2** ist, welches hergestellt wird aus der Reaktion eines α-Isocyanatodialkoxysilans mit einem Polyalkoxyalkylendiol **P21,** insbesondere mit einem Ungesättigtheitsgrad von tiefer als 0.02 mEq/g und einem Molekulargewicht zwischen 4'000 und 30'000 g/mol, insbesondere zwischen 8'000 und 30'000 g/mol.

11. Feuchtigkeitshärtende Zusammensetzung gemäss einem der vorhergehenden Ansprüche, **dadurch gekennzeichnet, dass** der Anteil des Aminosilans **AS** an der Zusammensetzung 0.1 bis 5 Gewichts-%, insbesondere 0.3 bis 3 Gewichts-%, ist.

12. Feuchtigkeitshärtende Zusammensetzung gemäss einem der vorhergehenden Ansprüche, **dadurch gekennzeichnet, dass** der Anteil des Silans **S** an der Zusammensetzung 0.1 bis 5 Gewichts-%, insbesondere 0.5 bis 4 Gewichts-%, ist.

13. Feuchtigkeitshärtende Zusammensetzung gemäss einem der vorhergehenden Ansprüche, **dadurch gekennzeichnet, dass** das Silan **S** in einer Menge von 0.2 bis 10 Gewichts-% in Bezug auf das silanfunktionelle Polymer **P** eingesetzt wird.

14. Feuchtigkeitshärtende Zusammensetzung gemäss einem der vorhergehenden Ansprüche, **dadurch gekennzeichnet, dass** das Aminosilan **AS** in einer Menge von 0.2 bis 10 Gewichts-% in Bezug auf das silanfunktionelle Polymer **P** eingesetzt wird.

15. Feuchtigkeitshärtende Zusammensetzung gemäss einem der vorhergehenden Ansprüche, **dadurch gekennzeichnet, dass** die Zusammensetzung zusätzlich mindestens einen Weichmacher und/oder mindestens einen Füllstoff, insbesondere Russ, und/oder mindestens einen Katalysator für die Reaktionen der Silangruppen enthält.

16. Verwendung einer feuchtigkeitshärtenden Zusammensetzung gemäss einem der Ansprüche 1 bis 15 als Klebstoff, Dichtstoff oder als Beschichtung, insbesondere als elastischer Kleb- oder Dichtstoff.

17. Verwendung gemäss Anspruch 16 für das Verkleben von Bauteilen im Hoch- oder Tiefbau und bei der Fertigung oder Reparatur von industriellen Gütern oder Konsumgütern, insbesondere von Transportmitteln.

18. Verwendung gemäss Anspruch 16 für das Abdichten von Fugen, Nähten oder Hohlräumen in der industriellen Fertigung oder Reparatur, oder im Hoch- oder Tiefbau.

19. Verfahren der Verklebung von Substraten **S1** und **S2** umfassend die Schritte
- Applikation einer Zusammensetzung gemäss einem der Ansprüche 1 bis 15 auf ein Substrat **S1** und/oder ein Substrat **S2,**
- Kontaktieren der Substrate **S1** und **S2** über die applizierte Zusammensetzung,
- Aushärtung der Zusammensetzung durch Kontakt mit Feuchtigkeit,
wobei die Substrate **S1** und **S2** gleich oder verschieden voneinander sind.

20. Verfahren des Abdichtens umfassend die Schritte
- Applikation einer Zusammensetzung gemäss einem der Ansprüche 1 bis 15 zwischen ein Substrat **S1** und ein Substrat **S2,**
- Aushärtung der Zusammensetzung durch Kontakt mit Feuchtigkeit,
wobei die Substrate **S1** und **S2** gleich oder verschieden voneinander sind.

21. Verfahren gemäss Anspruch 19 oder 20, **dadurch gekennzeichnet, dass** mindestens eines der Substrate **S1** oder **S2** Glas, Glaskeramik, Beton, Mörtel, Backstein, Ziegel, Gips, ein Naturstein wie Granit oder Marmor; ein Metall oder eine Legierung wie Aluminium, Stahl, Buntmetall, verzinktes Metall; ein Holz, ein Kunststoff wie PVC, Polycarbonat, PMMA, Polyester, Epoxidharz; eine Pulverbeschichtung, eine Farbe oder ein Lack, insbesondere ein Automobillack, ist.

22. Verklebter Artikel, welcher mittels eines Verfahrens zur Verklebung gemäss Anspruch 19 oder 21 hergestellt wird.

23. Abgedichteter Artikel, welcher mittels eines Verfahrens zur Abdichtung gemäss einem der Ansprüche 20 oder 21 hergestellt wird.

24. Verklebter oder abgedichteter Artikel gemäss Anspruch 22 oder 23, **dadurch gekennzeichnet, dass** der Artikel ein Bauwerk, ein Industriegut oder ein Transportmittel, insbesondere ein Fahrzeug zu Wasser oder zu Lande, bevorzugt ein Automobil, ein Bus, ein Lastkraftwagen, ein Zug oder ein Schiff, oder ein Teil davon, ist.

## Claims

1. A moisture-curing composition comprising
a) at least one silane-functional polymer **P** having at least two end groups of the formula (I) 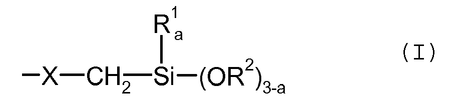 where
R¹ is an alkyl group having 1 to 8 C atoms, more particularly a methyl group or an ethyl group;
R² is an alkyl group having 1 to 5 C atoms, more particularly a methyl group or an ethyl group or an isopropyl group;
a is 0, 1 or 2; and
X is a divalent radical selected from the group consisting of -NH-CO-N(R³)-, -NH-CO-S-, -NH-CO-O-, -O-CO-NH-, -N(R³)-CO-NH-, and -S-CO-NH-,
where R³ is a hydrogen atom or is a linear or branched hydrocarbon radical having 1 to 20 C atoms which optionally contains cyclic fractions and which optionally has at least one functional group selected from the group consisting of alkoxysilyl, ether, sulfone, nitrile, nitro, carboxylic ester, sulfonic ester, and phosphonic ester;
b) at least aminosilane **AS** having at least one primary and/or secondary amino group;
c) at least one silane **S** which is selected from the group consisting of (meth)acrylic silanes of the formula (II) and anhydridosilanes of the formula (III), 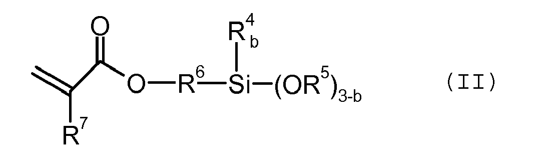 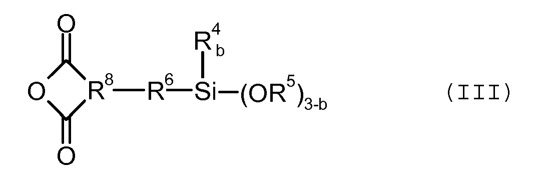
where
R⁴ is an alkyl group having 1 to 8 C atoms, more particularly a methyl group or an ethyl group;
R⁵ is an alkyl group having 1 to 5 C atoms, more particularly a methyl group or an ethyl group or an isopropyl group;
R⁶ is a linear or branched, optionally cyclic, alkylene group having 2 to 20, more particularly
3, C atoms, optionally with aromatic fractions, and optionally with heteroatoms,
R⁷ is a hydrogen atom or is a methyl group,
R⁸ is a trivalent hydrocarbon radical having 2 to 5, more particularly 2, C atoms, and
b is 0 or 1, in particular 0.

2. The moisture-curing composition of claim 1, **characterized in that** the aminosilane **AS** is selected from the group consisting of 3-aminopropyltrimethoxysilane, 3-aminopropyltriethoxysilane, N-(2-aminoethyl)-3-aminopropyltrimethoxysilane, N-(2-aminoethyl)-3-aminopropylmethyldimethoxysilane, N-(2-aminoethyl)-3-aminopropyltriethoxysilane, and N-(2-aminoethyl)-3-aminopropyltriisopropoxysilane, more particularly from the group consisting of N-(2-aminoethyl)-3-aminopropyl-trimethoxysilane, N-(2-aminoethyl)-3-aminopropylmethyldimethoxysilane, N-(2-aminoethyl)-3-aminopropyltriethoxysilane, and N-(2-aminoethyl)-3-aminopropyltriisopropoxysilane.

3. The moisture-curing composition of any one of the preceding claims, **characterized in that** the silane **S** is (3-methacryloyloxypropyl)trimethoxysilane, (3-methacryloyloxypropyl)triethoxysilane or (3-methacryloyloxypropyl)triisopropoxysilane.

4. The moisture-curing composition of any one of claims 1 or 2, **characterized in that** the silane **S** is 3-(trimethoxysilyl)propylsuccinic anhydride or 3-(triethoxysilyl)propylsuccinic anhydride, particularly 3-(triethoxysilyl)propylsuccinic anhydride.

5. The moisture-curing composition of any one of the preceding claims, **characterized in that** a is 1.

6. The moisture-curing composition of any one of the preceding claims, **characterized in that** the silane-functional polymer **P** is a silane-functional polymer **P1** for which X in formula (I) is -NH-CO-N(R³)- or -NH-CO-S- or -NH-CO-O-, and which is obtainable from the reaction of a polyurethane polymer **P11** which contains isocyanate groups, such as is obtained through the reaction of at least one polyisocyanate with at least one polyol, with an α-aminosilane, an α-mercaptosilane or an α-hydroxysilane, the silane being used stoichiometrically or slightly superstoichiometrically in relation to the isocyanate groups of the polyurethane polymer **P11.**

7. The moisture-curing composition of any one of claims 1 to 5, **characterized in that** the silane-functional polymer **P** is a silane-functional polymer **P2** for which X in formula (I) is -O-CO-NH- or -N (R³) -CO-NH- or -S-CO-NH-, and which is obtainable from the reaction of a polymer **P21** containing at least two isocyanate-reactive groups with at least one α-isocyanatosilane.

8. The moisture-curing composition of claim 7, **characterized in that** the polymer **P21** containing at least two isocyanate-reactive groups is a polyol, more particularly a polyoxyalkylene polyol, preferably having a degree of unsaturation of less than 0.02 meq/g and a molecular weight of between 4000 and 30 000 g/mol, more particularly between 8000 and 30 000 g/mol.

9. The moisture-curing composition of claim 7 or 8, **characterized in that** the α-isocyanatosilane is (isocyanatomethyl)methyldimethoxysilane or (isocyanatomethyl)methyldiethoxysilane.

10. The moisture-curing composition of any one of claims 1 to 5, **characterized in that** a is 1 and **in that** the silane-functional polymer **P** is a silane-functional polymer **P2** which is prepared from the reaction of an α-isocyanatodialkoxysilane with a polyoxyalkylenediol **P21,** more particularly having a degree of unsaturation of less than 0.02 meq/g and a molecular weight of between 4000 and 30 000 g/mol, more particularly between 8000 and 30 000 g/mol.

11. The moisture-curing composition of any one of the preceding claims, **characterized in that** the fraction of the aminosilane **AS** in the composition is 0.1% to 5% by weight, more particularly 0.3% to 3% by weight.

12. The moisture-curing composition of any one of the preceding claims, **characterized in that** the fraction of the silane **S** in the composition is 0.1% to 5% by weight, more particularly 0.5% to 4% by weight.

13. The moisture-curing composition of any one of the preceding claims, **characterized in that** the silane **S** is used in an amount of 0.2% - 10% by weight in relation to the silane-functional polymer **P.**

14. The moisture-curing composition of any one of the preceding claims, **characterized in that** the aminosilane **AS** is used in an amount of 0.2% - 10% by weight in relation to the silane-functional polymer **P.**

15. The moisture-curing composition of any one of the preceding claims, **characterized in that** the composition further comprises at least one plasticizer and/or at least one filler, more particularly carbon black and/or at least one catalyst for the reactions of the silane groups.

16. The use of a moisture-curing composition of any one of claims 1 to 15 as an adhesive, sealant or coating, more particularly as an elastic adhesive or sealant.

17. The use of claim 16 for the adhesive bonding of components in construction or civil engineering and in the manufacture or repair of industrial goods or consumer goods, more particularly of means of transport.

18. The use of claim 16 for the sealing of joints, seams or cavities in industrial manufacture or repair, or in construction or civil engineering.

19. A method of adhesively bonding substrates **S1** and **S2,** comprising the steps of
- applying a composition of any one of claims 1 to 15 to a substrate **S1** and/or a substrate **S2,**
- contacting the substrates **S1** and **S2** via the applied composition,
- curing the composition by contact with moisture,
the substrates **S1** and **S2** being alike or different from one another.

20. A method of sealing, comprising the steps of
- applying a composition of any one of claims 1 to 15 between a substrate **S1** and a substrate **S2,**
- curing the composition by contact with moisture,
the substrates **S1** and **S2** being alike or different from one another.

21. The method of claim 19 or 20, **characterized in that** at least one of the substrates **S1** or **S2** is glass, glass ceramic, concrete, mortar, brick, tile, plaster, a natural stone such as granite or marble; a metal or an alloy such as aluminum, steel, nonferrous metal, galvanized metal; a wood, a plastic such as PVC, polycarbonate, PMMA, polyester, epoxy resin; a powder coating, a paint or a finish, more particularly an automobile finish.

22. An adhesively bonded article produced by means of a method of adhesive bonding of claim 19 or 21.

23. A sealed article produced by means of a method of sealing of either of claims 20 and 21.

24. The adhesively bonded or sealed article of claim 22 or 23, **characterized in that** the article is a built structure, an industrial product or a means of transport, more particularly a water or land vehicle, preferably an automobile, a bus, a truck, a train or a boat, or a part thereof.

## Revendications

1. Composition durcissable par l'humidité, comprenant
a) au moins un polymère **P** à fonction silane, comportant au moins deux groupes terminaux de formule (I) 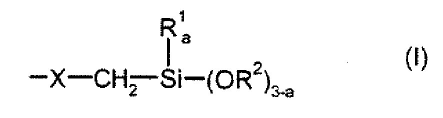 dans laquelle
R¹ représente un groupe alkyle ayant de 1 à 8 atomes de carbone, en particulier un groupe méthyle ou un groupe éthyle ;
R² représente un groupe alkyle ayant de 1 à 5 atomes de carbone, en particulier un groupe méthyle ou un groupe éthyle ou un groupe isopropyle ;
a représente 0, 1 ou 2, et
X représente un radical divalent qui est choisi dans l'ensemble constitué par -NH-CO-N(R³)-, -NH-CO-S-, -NH-CO-O-, -O-CO-NH-, -N(R³)-CO-NH- et -S-CO-NH-,
R³ représentant un atome d'hydrogène ou un radical hydrocarboné linéaire ou ramifié ayant de 1 à 20 atomes de carbone, qui comporte éventuellement des fragments cycliques et qui comporte éventuellement au moins un groupe fonctionnel qui est choisi dans l'ensemble constitué par les groupes alcoxysilyle, éther, sulfone, nitrile, nitro, ester d'acide carboxylique, ester d'acide sulfonique et ester d'acide phosphonique ;
b) au moins un aminosilane **AS** comportant au moins un groupe amino primaire et/ou un groupe amino secondaire ;
c) au moins un silane **S** qui est choisi dans le groupe constitué par les (méth)acrylsilanes de formule (II) et les anhydrosilanes de formule (III), 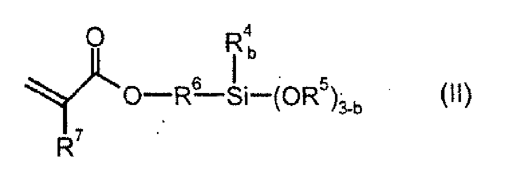 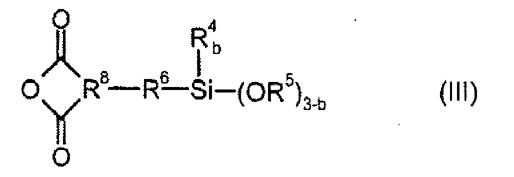
dans lesquelles
R⁴ représente un groupe alkyle ayant de 1 à 8 atomes de carbone, en particulier un groupe méthyle ou un groupe éthyle ;
R⁵ représente un groupe alkyle ayant de 1 à 5 atomes de carbone, en particulier un groupe méthyle ou un groupe éthyle ou un groupe isopropyle ;
R⁶ représente un groupe alkylène linéaire ou ramifié, éventuellement cyclique, ayant de 2 à 20, en particulier 3 atomes de carbone, comportant éventuellement des fragments aromatiques et éventuellement des hétéroatomes ;
R⁷ représente un atome d'hydrogène ou un groupe méthyle ;
R⁸ représente un radical hydrocarboné trivalent ayant de 2 à 5, en particulier 2 atomes de carbone, et
b représente 0 ou 1, en particulier 0.

2. Composition durcissable par l'humidité selon la revendication 1, **caractérisée en ce que** l'aminosilane **AS** est choisi dans le groupe constitué par le 3-aminopropyltriméthoxysilane, le 3-aminopropyltriéthoxysilane, le N-(2-aminoéthyl)-3-aminopropyltriméthoxysilane, le N-(2-aminoéthyl)-3-aminopropylméthyldiméthoxysilane, le N-(2-aminoéthyl)-3-aminopropyl-triéthoxysilane et le N-(2-aminoéthyl)-3-aminopropyl-triisopropoxysilane, en particulier dans le groupe constitué par le N-(2-aminoéthyl)-3-aminopropyltriméthoxysilane, le N-(2-aminoéthyl)-3-aminopropylméthyldiméthoxysilane, le N-(2-aminoéthyl)-3-aminopropyl-triéthoxysilane et le N-(2-aminoéthyl)-3-aminopropyl-triisopropoxysilane.

3. Composition durcissable par l'humidité selon l'une quelconque des revendications précédentes, **caractérisée en ce que** le silane **S** est le (3-méthacryloxypropyl)triméthoxysilane, le (3-méthacryloxypropyl)triéthoxysilane ou le (3-méthacryloxypropyl)triisopropoxysilane.

4. Composition durcissable par l'humidité selon l'une quelconque des revendications précédentes, **caractérisée en ce que** le silane **S** est l'anhydride 3-(triméthoxysilyl)propylsuccinique ou l'anhydride 3-(triéthoxysilyl)propylsuccinique, en particulier l'anhydride 3-(triéthoxysilyl)propylsuccinique.

5. Composition durcissable par l'humidité selon l'une quelconque des revendications précédentes, **caractérisée en ce que** a = 1.

6. Composition durcissable par l'humidité selon l'une quelconque des revendications précédentes, **caractérisée en ce que** le polymère à fonction silane **P** est un polymère à fonction silane **P1** dans lequel X dans la formule (I) représente un groupe -NH-CO-N(R³)- ou -NH-CO-S- ou -NH-CO-O-, et qui peut être obtenu par la réaction d'un polymère polyuréthanne **P11** contenant des groupes isocyanate, tel qu'il est obtenu par la réaction d'au moins un polyisocyanate avec au moins un polyol, avec un α-amino-, un α-mercapto- ou un α-hydroxysilane, le silane étant utilisé en une proportion stoechiométrique ou légèrement supérieure à la quantité stoechiométrique, par rapport aux groupes isocyanate du polymère polyuréthanne **P11.**

7. Composition durcissable par l'humidité selon l'une quelconque des revendications 1 à 5, **caractérisée en ce que** le polymère à fonction silane **P** est un polymère à fonction silane **P2** dans lequel X dans la formule (I) représente -O-CO-NH- ou -N(R³)-CO-NH- ou -S-CO-NH-, et qui peut être obtenu par la réaction d'un polymère **P21,** comportant au moins deux groupes réactifs vis-à-vis d'isocyanates, avec au moins un α-isocyanatosilane.

8. Composition durcissable par l'humidité selon la revendication 7, **caractérisée en ce que** le polymère **P21** comportant au moins deux groupes réactifs vis-à-vis d'isocyanates est un polyol, en particulier un polyoxyalkylèneglycol, ayant de préférence un degré d'insaturation de moins de 0,02 mEq/g et une masse moléculaire comprise entre 4 000 et 30 000 g/mole, en particulier entre 8 000 et 30 000 g/mole.

9. Composition durcissable par l'humidité selon la revendication 7 ou 8, **caractérisée en ce que** l'α-isocyanatosilane est l'(isocyanatométhyl)-méthyldiméthoxysilane ou l'(isocyanatométhyl)-méthyldiéthoxysilane.

10. Composition durcissable par l'humidité selon l'une quelconque des revendications 1 à 5, **caractérisée en ce que** a = 1 et **en ce que** le polymère à fonction silane **P** est un polymère à fonction silane **P2,** qui est préparé par la réaction d'un α-isocyanatodialcoxysilane avec un polyalcoxyalkylènediol **P21,** en particulier ayant un degré d'insaturation de moins de 0,02 mEq/g et une masse moléculaire comprise entre 4 000 et 30 000 g/mole, en particulier entre 8 000 et 30 000 g/mole.

11. Composition durcissable par l'humidité selon l'une quelconque des revendications précédentes, **caractérisée en ce que** la proportion de l'aminosilane **AS** par rapport à la composition vaut de 0,1 à 5 % en poids, en particulier de 0,3 à 3 % en poids.

12. Composition durcissable par l'humidité selon l'une quelconque des revendications précédentes, **caractérisée en ce que** la proportion du silane **S** par rapport à la composition vaut de 0,1 à 5 % en poids, en particulier de 0,5 à 4 % en poids.

13. Composition durcissable par l'humidité selon l'une quelconque des revendications précédentes, **caractérisée en ce que** le silane **S** est utilisé en une quantité de 0,2 à 10 % en poids, par rapport au polymère à fonction silane **P.**

14. Composition durcissable par l'humidité selon l'une quelconque des revendications précédentes, **caractérisée en ce que** l'aminosilane **AS** est utilisé en une quantité de 0,2 à 10 % en poids, par rapport au polymère à fonction silane **P.**

15. Composition durcissable par l'humidité selon l'une quelconque des revendications précédentes, **caractérisée en ce que** la composition contient en outre au moins un plastifiant et/ou au moins une charge, en particulier du noir de carbone, et/ou au moins un catalyseur pour les réactions des groupes silane.

16. Utilisation d'une composition durcissable par l'humidité selon l'une quelconque des revendications 1 à 15, comme adhésif, matériau d'étanchéité ou comme revêtement, en particulier comme adhésif élastique ou matériau d'étanchéité élastique.

17. Utilisation selon la revendication 16, pour le collage d'éléments de construction dans le bâtiment ou les travaux publics et dans la fabrication ou la réparation de matériels industriels ou de biens de consommation, en particulier de moyens de transport.

18. Utilisation selon la revendication 16, pour l'étanchéification de joints, de soudures ou de cavités dans la réparation ou la fabrication industrielles ou dans le bâtiment et les travaux publics.

19. Procédé pour le collage de supports **S1** et **S2,** comprenant les étapes
- application d'une composition selon l'une quelconque des revendications 1 à 15 sur un support **S1** et/ou un support **S2,**
- mise en contact des supports **S1** et **S2** sur la composition appliquée,
- durcissement de la composition par contact avec l'humidité,
les supports **S1** et **S2** étant identiques ou différents l'un de l'autre.

20. Procédé pour l'étanchéification, comprenant les étapes
- application d'une composition selon l'une quelconque des revendications 1 à 15 entre un support **S1** et un support **S2,**
- durcissement de la composition par contact avec l'humidité,
les supports **S1** et **S2** étant identiques ou différents l'un de l'autre.

21. Procédé selon la revendication 19 ou 20, **caractérisé en ce qu'**au moins l'un des supports **S1** ou **S2** est le verre, la vitrocéramique, le béton, le mortier, la brique, la tuile, le plâtre, une pierre naturelle telle que le granit ou le marbre ; un métal ou un alliage tel que l'aluminium, l'acier, un métal non ferreux, un métal galvanisé ; un bois, une matière plastique telle que le PVC, le polycarbonate, le PMMA, le polyester, la résine époxy ; un revêtement de poudre, une peinture ou une peinture laquée, en particulier une peinture d'automobile.

22. Article collé, qui est produit par un procédé pour l'étanchéification selon la revendication 19 ou 21.

23. Article étanchéifié, qui est produit par un procédé pour le collage selon la revendication 20 ou 21.

24. Article collé ou étanchéifié selon la revendication 22 ou 23, **caractérisé en ce que** l'article est un édifice, un matériel industriel ou un moyen de transport, en particulier un véhicule aquatique ou terrestre, en particulier une automobile, un autobus, un camion, un train ou un bateau, ou une partie de ceux-ci.
